# EUROPÄISCHE PATENTANMELDUNG

(11) **EP 4 454 452 A1**
(43) Veröffentlichungstag der Anmeldung: **30.10.2024**
(21) Anmeldenummer: 24166354.1
(22) Anmeldetag: 26.03.2024
(51) Int. Cl.: A01D 41/127, A01F 12/44, A01D 75/28

(54) **SENSORANORDNUNG ZUR ERFASSUNG DER HÖHE EINES GEMISCHS AUF EINEM FÖRDERBODEN UND/ODER SIEB EINES REINIGUNGSZUSAMMENBAUS EINES MÄHDRESCHERS**

(30) Priorität: 25.04.2023 DE 102023110538
(71) Anmelder: Deere & Company, Moline, IL 61265 (US)
(72) Erfinder: Rittershofer, Martin, Mannheim (DE); Broschart, Marco, Mannheim (DE); Höpfner, Maximilian, Mannheim (DE); Guenther, Andi, Mannheim (DE); Huebner, Ralf, Mannheim (DE)
(74) Vertreter: Holst, Sönke

(57) **Zusammenfassung**

Eine Sensoranordnung zur Erfassung der Höhe eines Gemischs (98) auf einem Förderboden (56, 54) und/oder Sieb (42) eines Reinigungszusammenbaus (26) eines Mähdreschers (10) zeichnet sich dadurch aus, dass an der Oberseite des Förderbodens (56, 54) und/oder des Siebs (42) wenigstens zwei übereinander positionierte, lichtempfindliche Sensoren (90) sowie ein Sender (88) im Abstand von den Sensoren (90) angebracht sind, wobei die Sensoren (90) konfiguriert sind, vom Sender (88) abgestrahltes Licht zu empfangen, insofern es nicht durch das Gemisch (98) absorbiert wird, und die Sensoren (90) mit einer Auswertungseinrichtung (92) verbunden sind, die konfiguriert ist, anhand des Ausgangssignals der Sensoren (90) ein für die Höhe des Gemischs (90) repräsentatives Ausgangssignal (104) zu erzeugen.

## Beschreibung

Die Erfindung betrifft eine Sensoranordnung zur Erfassung der Höhe eines Gemischs auf einem Förderboden und/oder Sieb eines Reinigungszusammenbaus eines Mähdreschers, sowie eine damit ausgestattete Reinigungseinrichtung und einen Mähdrescher.

### Stand der Technik

Mähdrescher dienen zur Ernte von Korn. Die oberirdischen Teile oder Früchte von Pflanzen, wie Soja, Weizen oder Hafer, werden abgeschnitten oder aufgesammelt oder abgestreift oder die Fruchtstände der Pflanzen, wie Mais oder Sonnenblumen, werden abgetrennt und einer Dresch- und Trenneinrichtung zugeführt, um die Körner (in der Gesamtheit als "das Korn" bezeichnet) von den übrigen Bestandteilen des Ernteguts zu trennen. Nach dem Dresch- und Trennvorgang befinden sich noch Verunreinigungen im Korn, wie Strohteilchen und Spreu. Das beim Dreschen und Trennen gewonnene Gemisch aus Korn und Verunreinigungen wird daher einem Reinigungszusammenbau zugeführt, der üblicherweise ein Obersieb und ein Untersieb und optional ein Vorsieb und/oder einen Förderboden umfasst.

Zur Kontrolle und/oder automatischen Steuerung von Einstellungen der Dresch- und Trenneinrichtung und/oder des Reinigungszusammenbaus ist es vorteilhaft, die Höhe und somit Menge des Gemischs zu durch einen Sensor zu erfassen, beispielsweise auf einem Förderboden, der das Gemisch dem Reinigungszusammenbau zuführt, oder auf einem der Siebe. Hierzu können eine Reihe an Sensoren über die Breite des Förderbodens oder Siebs verteilt sein, um die möglicherweise unterschiedlichen Höhen des Gemisches in seitlicher Richtung zu erfassen. Anhand der Höhe des Gemischs können Einstellungen der Dresch- oder Trenneinrichtung oder des Reinigungszusammenbaus oder die Vortriebsgeschwindigkeit verändert werden und wenn sich, z.B. an einem Seitenhang, eine ungleichmäßige Verteilung über die Breite ergeben sollte, können geeignete Maßnahmen getroffen werden, wie über die Breite betrachtet unterschiedliche Einstellungen von verstellbaren Öffnungen von Dresch- oder Trennkörben oder Verstellung von Leitblechen oder Ansteuerung eines Querförderers zur seitlichen Ablenkung des Gemischs oder Anpassung einer seitlichen Schwingung des Reinigungszusammenbaus.

Zum Stand der Technik sei auf die Offenbarung der WO 2015/181143 A1 verwiesen, in der vorgeschlagen wird, eine Anzahl an Sensoren übereinander an einer tragenden Struktur anzubringen und mehrere derartige Strukturen an der Oberseite eines Förderbodens oder eines Siebs seitlich und/oder in Förderrichtung zueinander versetzt anzuordnen. Die Sensoren arbeiten kapazitiv oder nach dem Wirbelstromprinzip und geben unterschiedliche Signale ab, die davon abhängen, ob sich der jeweilige Sensor innerhalb des Gemischs befindet oder nicht. Eine Kontrolleinheit kann somit die Höhe des Gemischs an den Stellen erkennen, an denen die Strukturen angebracht sind, und darauf basierend eine Anzeigeeinrichtung in der Kabine ansteuern, anhand welcher ein Bediener nötigenfalls Einstellungen des Mähdreschers ändern kann.

Ein anderer Ansatz zur Ermittlung des lokalen Materialdurchsatzes in einer Dresch- und Trenneinrichtung oder einem Reinigungszusammenbau eines Mähdreschers besteht in der Verwendung von Lichtschranken, die durch die Siebe hindurch fallende Körner erfassen (US 4 360 998 A, EP 3 210 458 A1, EP 3 482 624 A1) oder von akustischen Sensoren, die auftreffende Körner nachweisen (WO 2019/171246 A1).

### Aufgabe

Die Anordnung nach WO 2015/181143 A1 erfordert eine hohe Anzahl spezieller Sensoren, bei denen es sich um komplexe und teure Bauelemente handelt. Die bisherigen, zur Erfassung der Materialströme dienenden Lichtschranken oder akustischen Sensoren sind demgegenüber preisgünstiger, aber sie eignen sich nicht zur Erfassung der Materialhöhe des Gemischs an der Oberseite eines Förderers oder Siebs des Reinigungszusammenbaus, da sie nur jeweils vorbeiströmendes oder aufprallendes Material erfassen.

Die Aufgabe der vorliegenden Erfindung wird darin gesehen, eine gegenüber dem Stand der Technik verbesserte Sensoranordnung für einen Mähdrescher vorzuschlagen, welche die erwähnten Nachteile nicht oder nur in vermindertem Maße aufweist.

### Lösung

Diese Aufgabe wird erfindungsgemäß durch die Lehre der Patentansprüche 1, 7 und 8 gelöst, wobei in den weiteren Patentansprüchen Merkmale aufgeführt sind, die die Lösung in vorteilhafter Weise weiterentwickeln.

Eine Sensoranordnung zur Erfassung der Höhe eines Gemischs auf einem Förderboden und/oder Sieb eines Reinigungszusammenbaus eines Mähdreschers umfasst wenigstens zwei übereinander an der Oberseite des Förderbodens und/oder des Siebs positionierte, lichtempfindliche Sensoren sowie zumindest einen im Abstand von den Sensoren angebrachten Sender. Die Sensoren sind konfiguriert, vom Sender abgestrahltes Licht zu empfangen, insofern es nicht durch das Gemisch absorbiert oder gestreut wird, d.h. der Weg des Lichts vom Sender zum Sensor durch das Gemisch nicht unterbrochen wird. Die Sensoren sind mit einer Auswertungseinrichtung verbunden, die konfiguriert ist, anhand des Ausgangssignals der Sensoren ein für die Höhe des Gemischs repräsentatives Ausgangssignal zu erzeugen.

Auf diese Weise erreicht man mit geringem Aufwand eine Erfassung der Höhe des Gemischs über dem Förderboden und/oder dem Sieb.

Der Sender kann konfiguriert sein, Licht im sichtbaren und/oder im infraroten und/oder im ultravioletten Wellenlängenbereich abzusenden, während die Sensoren in dem besagten Wellenlängenbereich sensitiv sein können.

Die Sensoren und der Sender sind insbesondere in seitlicher Richtung voneinander beabstandet. Es wird demnach die Höhe des Gemischs in einer quer zur Förderrichtung des Siebs oder Förderbodens verlaufenden Richtung detektiert.

Mehrere übereinander angeordnete Sensoren und der wenigstens eine zugehörige Sender können jeweils eine Lichtschranke bilden und mehrere Lichtschranken in seitlicher Richtung und/oder Förderrichtung des Gemischs relativ zueinander versetzt angeordnet sein, um eine Erfassung der Verteilung des Gemischs an mehreren, über die Breite des Förderbodens oder Siebs verteilten Positionen zu erfassen. Um die Verteilung in Längsrichtung des Siebs oder Förderbodens zu erfassen, könnten alternativ oder zusätzlich auch mehrere Lichtschranken in der besagten Längsrichtung hintereinander angeordnet werden.

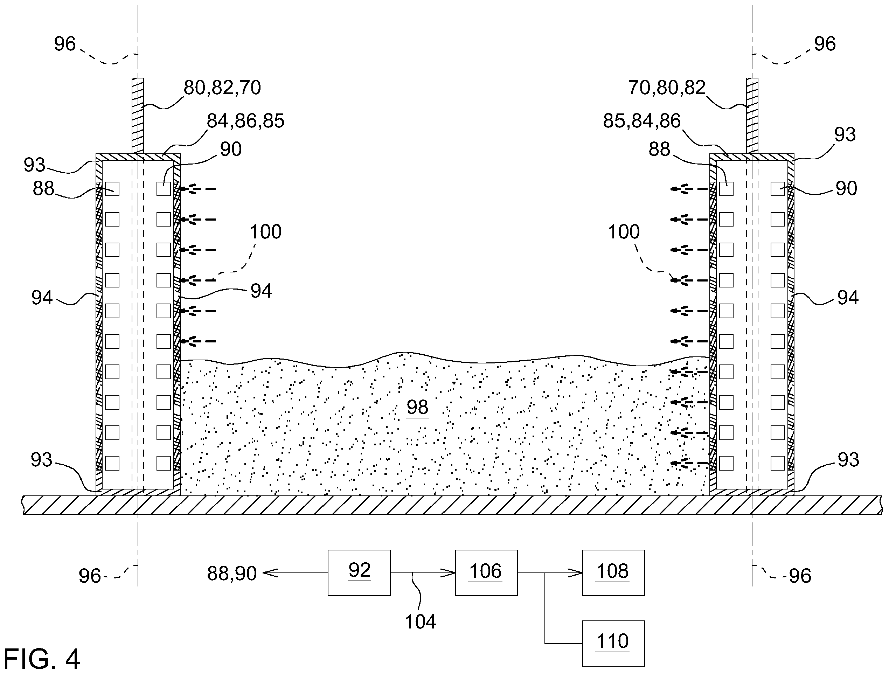

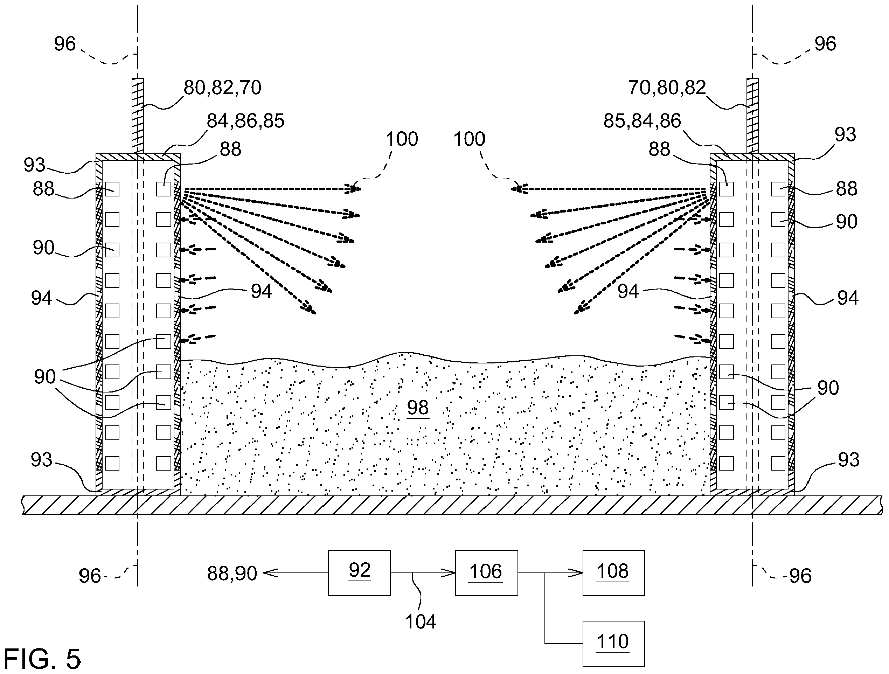

Es können mehrere übereinander angeordnete Sensoren und wenigstens ein (oder mehrere, insbesondere jeweils einem Sensor zugeordnete) Sender innerhalb eines gemeinsamen Gehäuses angeordnet und unterschiedlichen Lichtschranken zugeordnet sein. Bei einer möglichen Ausführungsform blicken die Sensoren zu einer ersten Seite und der oder die Sender sendet oder senden zur jeweils anderen Seite. Eine derartige Ausführungsform ist in der Figur 4 gezeigt. Bei einer anderen Ausführungsform können sowohl der oder die Sender als auch die Sensoren zur selben Seite senden bzw. blicken, d.h. die Lichtschranke im Reflexionsmodus arbeiten, oder die Sender und Empfänger zweier benachbarter Gehäuse können wechselseitig aktiviert werden, wie in der Figur 5 gezeigt.

Das Gehäuse kann in einer Aussparung eines Trennblechs angeordnet sein. Derartige, sich in der Längs- und Förderrichtung des Förderbodens oder Siebs und senkrecht von dessen Oberseite nach oben erstreckende Trennbleche (bzw. Kufen oder Finnen) dienen insbesondere dazu, das auf der Oberseite des Förderbodens oder Siebs geförderte Gemisch daran zu hindern, zur hangabwärts geneigten Seite des Förderbodens oder Siebs zu rutschen.

Ein Reinigungszusammenbau kann mit einem Förderboden und/oder einem Sieb und einer Sensoranordnung ausgestattet sein. Bei dem Sieb kann es sich um ein Obersieb, ein Untersieb und/oder ein Vorsieb handeln. Der Förderboden kann sich an einer beliebigen Stelle befinden, an der Erntegut innerhalb des Reinigungszusammenbaus zu transportieren ist oder dem Reinigungszusammenbau zugeführt wird. Insbesondere dient der Förderboden dazu, das Gemisch von einer Dresch- und/oder Trenneinrichtung beliebiger Art, gegebenenfalls über eine Fallstufe, zu einem Sieb des Reinigungszusammenbaus zu befördern. Weitere Fördereinrichtungen können dem Förderboden vor- oder nachgeordnet sein. Der Förderboden umfasst üblicherweise eine sägezahnartige Oberfläche und wird in eine rüttelnde, vibrierende oder schwingende Bewegung versetzt, um das Gemisch zu transportieren.

Die Auswertungseinrichtung kann mit einer Steuereinheit verbunden sein, die konfiguriert ist, basierend auf dem Ausgangssignal einen Aktor eines Mähdreschers im Sinne einer Vergleichmäßigung der seitlichen Verteilung des Gemischs anzusteuern, wenn es erforderlich ist, d.h. eine Ungleichmäßigkeit in der besagten Verteilung vorliegt, die einen bestimmten Schwellenwert überschreitet.

Insbesondere kann die Steuereinheit konfiguriert sein, durch den Aktor an der Unterseite des Dreschbereichs eines Axialdreschwerks in dessen Umfangsrichtung verteilte Klappen derart anzusteuern, dass die Klappen an jener Seite, an der die Höhe des Gemischs größer als auf der anderen Seite ist, geschlossen werden und jene auf der Seite mit geringerer Höhe des Gemischs geöffnet werden und/oder einen Antrieb eines zwischen dem Förderboden und dem Sieb angeordneten Querförderers und/oder einen Antrieb zur Verstellung von Leitblechen zur Steuerung der seitlichen Verteilung des Gemischs anzusteuern.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers,
- Fig. 2: eine perspektivische Ansicht des Reinigungszusammenbaus des Mähdreschers der Figur 1 von links hinten und oben,
- Fig. 3: eine Ansicht des Reinigungszusammenbaus ähnlich der Figur 2, jedoch ohne rückwärtigen Förderboden, und
- Fig. 4: einen Schnitt entlang der Linie 4-4 der Figur 2 mit einer ersten Ausführungsform einer Sensoranordnung, und
- Fig. 5: eine Zeichnung analog Figur 4 mit einer zweiten Ausführungsform einer Sensoranordnung.

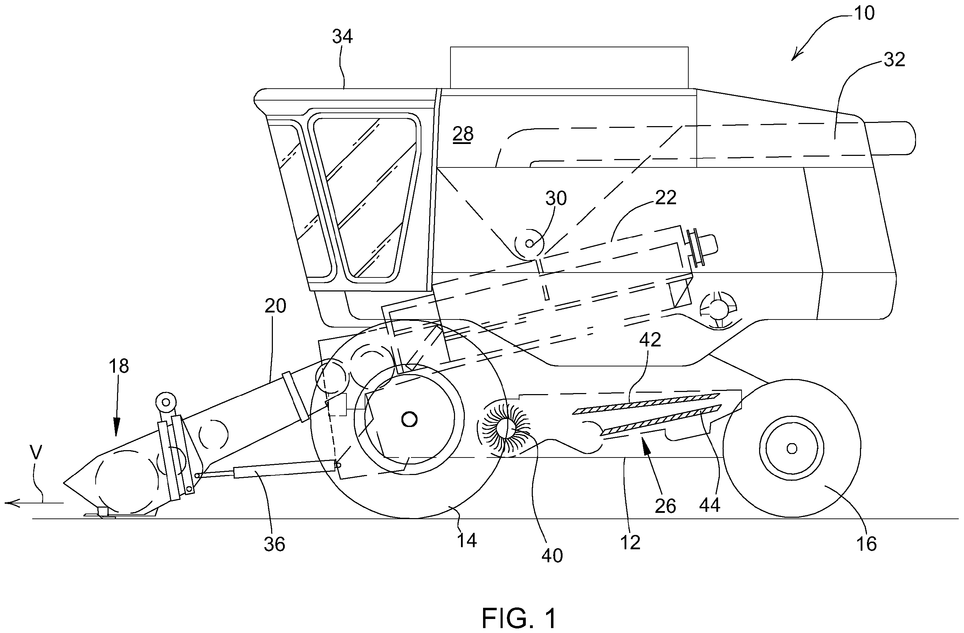

Die Figur 1 zeigt eine selbstfahrende Erntemaschine in Form eines Mähdreschers 10 mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb, die in der Figur 1 nach links verläuft.

An den vorderen Endbereich des Mähdreschers 10 ist ein Erntevorsatz 18 in Form eines Schneidwerks abnehmbar angeschlossen, um beim Erntebetrieb Erntegut in Form von Getreide oder anderen dreschbaren Halmfrüchten von dem Feld zu ernten und es nach oben und hinten durch einen Schrägfördererzusammenbau 20 einem Axialdreschwerk 22 zuzuführen. Das im Axialdreschwerk 22 durch Dreschkörbe und Roste hindurchtretende, Körner und Verunreinigungen enthaltende Gemisch gelangt in einen Reinigungszusammenbau 26. Durch den Reinigungszusammenbau 26 gereinigtes Getreide wird mittels einer Körnerschnecke einem Körnerelevator zugeführt, der es in einen Korntank 28 befördert. Das gereinigte Getreide aus dem Korntank 28 kann durch ein Entladesystem mit einer Querschnecke 30 und einem Entladeförderer 32 entladen werden. Die genannten Systeme werden mittels eines Verbrennungsmotors angetrieben und von einem Bediener aus einer Fahrerkabine 34 heraus kontrolliert und gesteuert. Das Axialdreschwerk 22 ist nur ein Ausführungsbeispiel und könnte durch ein Tangentialdreschwerk mit nachfolgenden Trenneinrichtungen in Form von Separatortrommeln und/oder Strohschüttlern oder Axialtrennrotoren ersetzt werden.

Der Reinigungszusammenbau 26 umfasst ein oberes Sieb 42 und ein unteres Sieb 44, die durch ein Gebläse 40 mit einem die Siebe 42, 44 nach hinten und oben durchströmenden Luftstrom beaufschlagt werden. Die Größe der Sieböffnungen und die Drehzahl des Gebläses 40 kann in an sich bekannter Art durch eine selbsttätige Reinigungseinstellung oder durch den Bediener aus der Fahrerkabine 34 verändert werden.

Das im vorderen Bereich des Axialdreschwerks 22 aus dem Erntegut herausgelöste (ausgedroschene) Gemisch aus Korn und Verunreinigungen wird durch einen vorderen Förderer 46 mit nebeneinander angeordneten Förderschnecken 63 nach hinten gefördert, der somit zum Fördern des ausgedroschenen Gemischs dient. Ein rückwärtiger Förderer 48 fördert das im rückwärtigen Bereich des Axialdreschwerks 22 separierte (getrennte) Gemisch nach vorn.

Am abgabeseitigen Ende des vorderen Förderers 46 ist ein Förderboden 56 vorgesehen, auf den nach hinten ein Querförderer 50 folgt. Rückseitig des Querförderers 50 ist eine Anzahl an sich quer und schräg nach oben und hinten erstreckenden, hintereinander angeordneten Lamellen 52 vorgesehen. Unterhalb des Querförderers 50 befindet sich ein weiterer Förderboden 54.

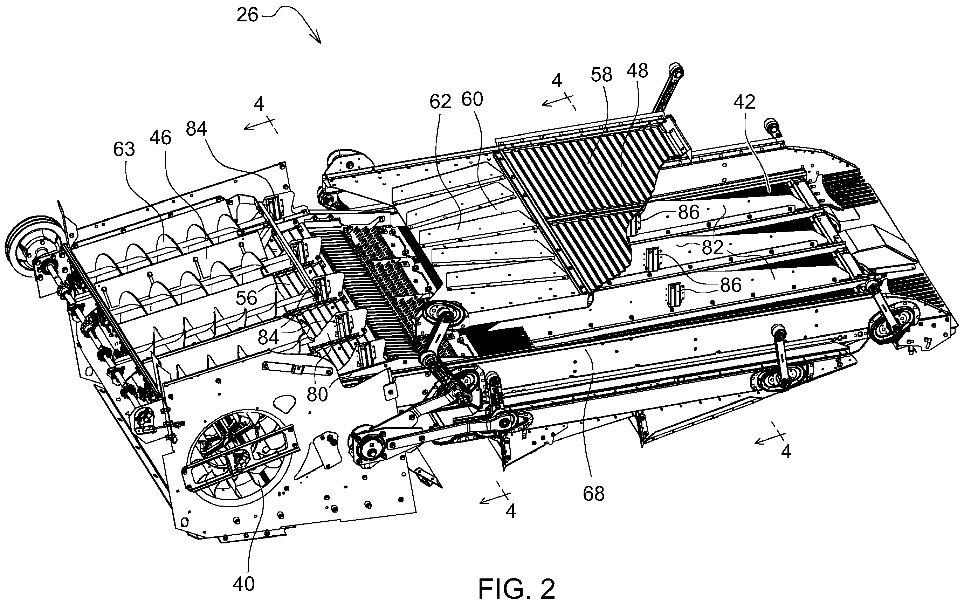

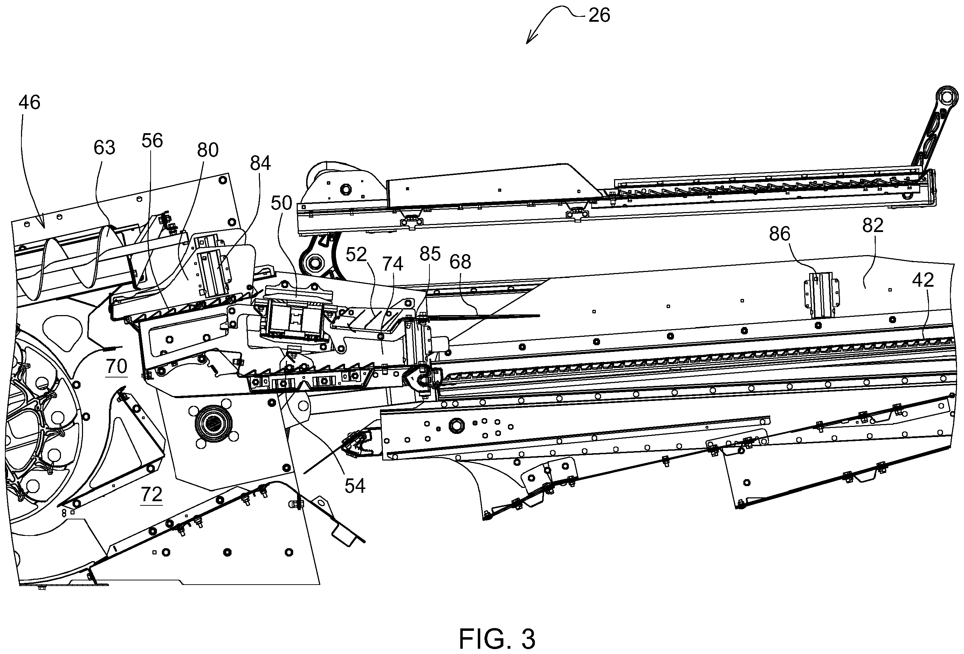

Es wird nun auf die Figuren 2 bis 3 verwiesen. Dort ist erkennbar, dass der vordere Förderer 46 eine Anzahl sich in Vorwärtsrichtung V (vgl. Figur 1) erstreckender, seitlich nebeneinander angeordneter Förderschnecken 63 umfasst. Der unmittelbar stromab folgende Förderboden 56 ist unterhalb des rückwärtigen Endes des vorderen Förderers 46 angeordnet und mit seinem vorderen Ende gegenüber dem rückwärtigen Ende des vorderen Förderers 46 nach vorn versetzt. Der Förderboden 56 ist mit sich quer erstreckenden Sägezahnprofilen ausgestattet. An der Oberseite des Förderbodens 56 sind sich vertikal und in Vorwärtsrichtung V erstreckende Trennbleche 80 angeordnet, die in seitlicher Richtung jeweils auf einer gedachten Linie angeordnet sind, die sich mittig zwischen zwei Förderschnecken 63 des vorderen Förderers 46 befindet. Die Trennbleche 80 sollen verhindern, dass sich das Gemisch seitlich auf dem Förderboden 56 bewegt, insbesondere beim Befahren eines Seitenhangs.

Der rückwärtige Förderer 48 umfasst einen rückwärtigen Bereich mit sich quer erstreckenden Sägezahnprofilen 58 und einen glatten vorderen Bereich 60 mit sich vertikal erstreckenden Leitblechen 62, die das separierte Gemisch seitlich zusammenführen. Dieses gelangt, wie anhand einer Gesamtschau der Figuren 1 bis 3 erkennbar ist, auf den Querförderer 50. Wie in der Figur 2 gezeigt, ist der vordere Bereich 60 an seinem vorderen Ende mittig mit einem Ausschnitt versehen. Das separierte Gemisch wird demnach dem Querförderer 50 zum größten Teil in dessen Mitte aufgegeben. Der rückwärtige Förderer 48 wird im Betrieb in eine nach vorn und hinten sowie oben und unten oszillierende Bewegung versetzt, was analog für die Siebe 42, 44 gilt. Hierzu kann der rückwärtige Förderer 48 an Schwingen aufgehängt sein und über einen Exzenterantrieb in die besagte Bewegung versetzt werden. Je nach Stellung des rückwärtigen Förderers 48 und nach seitlicher Position der Gutabgabe gelangt das vom rückwärtigen Förderer abgegebene Erntegut auf den Querförderer 50 und/oder auf die Lamellen 52.

Der Förderboden 56, der Querförderer 50 und zu einem gewissen Teil auch die Lamellen 52 bilden demnach einen Einlass des Reinigungszusammenbaus 26.

Unterhalb des Querförderers 50 ist der weitere Förderboden 54 vorgesehen, der mit sich quer erstreckenden Sägezahlprofilen ausgestattet ist. Der Querförderer 50 bildet mit dem Förderboden 56, den Lamellen 52 und hinter den Lamellen 52 angebrachten, sich nach hinten erstreckenden Fingerrechen 68 einen Zusammenbau, der gemeinsam in eine oszillierende Bewegung versetzbar ist, d.h. sich kontinuierlich nach vorn und hinten und unten und oben bewegt, analog zum rückwärtigen Förderer 48.

Ein oberer Auslass 70 des Gebläses 40 mündet unterhalb des Förderbodens 56. Ein unterer Auslass 72 des Gebläses 40 ist auf die Siebe 42, 44 gerichtet. An der Oberseite der oberen Siebe 42 sind sich in Längsrichtung erstreckende Trennbleche 82 seitlich nebeneinander angeordnet.

Weitere Einzelheiten zum Aufbau des Reinigungszusammenbaus 26 und insbesondere zum Querförderer 50 und dessen Ansteuerung im Sinne eines Vergleichmäßigens der Erntegutverteilung über die Breite des Reinigungszusammenbaus 26 finden sich in der DE 10 2022 118 393 A1, deren Offenbarung durch Verweis mit in die vorliegenden Unterlagen aufgenommen wird.

Zur Erfassung der Höhe des Gemischs und von dessen seitlicher Verteilung auf dem Förderboden 56, der das im vorderen Bereich des Axialdreschwerks 22 aus dem Erntegut herausgelöste (ausgedroschene) Gemisch aus Korn und Verunreinigungen über den Querförderer 50, die Lamellen 52 und den Förderboden 54 sowie die Fingerrechen 68 nach hinten auf das obere Sieb 42 abgibt, sind an den oberhalb des Förderbodens 56 angeordneten Trennblechen 80 eine Anzahl an Sensorzusammenbauten 84 angebracht.

Weiterhin ist auch der Förderboden 54 unterhalb der Fingerrechen 68 mit den über die Breite verteilten Sensorzusammenbauten 85 versehen, die an oberhalb des Förderbodens montierten Trennblechen 74 angebracht sind, die sich dort in Vorwärtsrichtung V erstrecken und über Breite verteilt sind, analog wie die Trennbleche 80.

Analog sind an den Trennblechen 82 oberhalb der oberen Siebe 42 eine Anzahl an Sensorzusammenbauten 86 angebracht, um die Höhe und seitliche Verteilung des Gemischs dort zu erfassen.

Der Aufbau der Sensorbauten 84, 85, 86 ist in der Figur 4 dargestellt. Sie umfassen auf einer (in der Figur 4 links eingezeichneten) Seite ihrer sich vertikal und in Vorwärtsrichtung erstreckenden Längsmittelebene 96, die der Längsmittelebene des Trennblechs 80 bzw. 74 oder 82 eine Anzahl an übereinander angeordneten Sendern 88 für Licht und auf der jeweils anderen Seite ihrer Längsmittelebene 96 eine Anzahl an übereinander angeordneten lichtempfindlichen Sensoren 90. Mit Licht ist hier nicht nur der für den Menschen sichtbare Wellenlängenbereich gemeint, sondern auch der infrarote und der ultraviolette Wellenlängenbereich. Bei den Sendern 88 kann es sich um Leuchtdioden handeln, z.B. für rotes Licht, oder um Laserdioden oder andere, geeignete elektronische Bauteile, die Licht aussenden, und bei den Empfängern 90 um Fototransistoren oder Fotodioden oder beliebige andere, lichtempfindliche elektronische Bauteile. Die Sensoren 90 und Sender 88 sind innerhalb von Gehäusen 93 angeordnet, die im Bereich der Sensoren 90 und Sender 88 mit lichtdurchlässigen Fenstern 94 ausgestattet sind. Die Gehäuse 93 sind ihrerseits in entsprechenden Aussparungen in den Trennblechen 80, 82 befestigt.

Jeweils ein Sender 88 eines (z.B. des in Figur 4 rechts eingezeichneten) Sensorzusammenbaus 84, 85, 86 und ein Sensor 90 eines benachbarten (z.B. des in Figur 4 links eingezeichneten) Sensorzusammenbaus 84, 85, 86 bilden eine Lichtschranke, wie durch die Pfeile 100 in der Figur 4 angedeutet. Dazu kann das Licht der Sender 88 möglichst genau auf den in derselben Höhe angeordneten, paarweise zugeordneten Sensor 90 gebündelt werden, z.B. durch eine Linse. Es wäre auch denkbar, weniger Sender 88 als Sensoren 90 zu verwenden, wenn die Sender 88 ein in vertikaler Richtung hinreichend weit aufgefächertes Lichtbündel abgeben. Insbesondere kann ein einziger Sender 88 in oder oberhalb der Höhe des obersten Sensors 90 angeordnet sein.

Wenn das Gemisch 98 sich in einer gewissen Höhe über dem Förderboden 56 oder dem oberen Sieb 42 befindet, wird es, abhängig von seiner Höhe, die optische Verbindung zwischen einem oder mehreren Sensoren 90 und Sendern 88 unterbrechen und der zugehörige Sensor 90 kein oder zumindest weniger Licht empfangen, als wenn das Gemisch 98 diese optische Verbindung nicht unterbricht, d.h. die Oberkante des Gemischs 98 unterhalb des Sensors 90 und Senders 88 liegt. Die Höhe des Gemischs 98 liegt demnach zwischen der Position des jeweils höchsten Sensors 90, der keine oder eine verminderte Lichtintensität erhält und der Position des jeweils tiefsten Sensors 90, der noch Licht empfängt. In Figur 4 würde somit der vierte Sensor 90 von unten (und die darüber liegenden Sensoren 90) noch Licht erhalten und die unteren drei Sensoren 90 kein Licht empfangen, da die Höhe des Gemischs 98 genau zwischen dem dritten und vierten Sensor 90 von unten liegt.

Die Sender 88 und Sensoren 90 sind mit einer Auswertungseinrichtung 92 elektrisch verbunden, die ein Ausgangssignal 104 bereitstellt, sei es über Kabel oder drahtlos (Radiowellen o.ä.). Die Auswertungseinrichtung 92 evaluiert die Signale der Sensoren 90 und stellt das Ausgangssignal 104 bereit, aus dem hervorgeht, wie hoch das Gemisch 98 ist. Da eine Anzahl an Lichtschranken bildenden Sensorzusammenbauten 84, 85, 86 über die Breite des Förderbodens 56 und des oberen Siebs 42 verteilt sind, erhält das Ausgangssignal 104 Informationen über die Höhe des Gemisches 98 an verschiedenen Stellen der Breite des Förderbodens 56 und oberen Siebs 42.

Es sei noch angemerkt, dass auch an den seitlichen Wänden des oberen Siebs 42 und des Förderbodens 56 sowie des Förderbodens 54 Sensorzusammenbauten 84, 85, 86 angebracht sind. Von diesen Sensorzusammenbauten 84, 85, 86 werden jeweils entweder nur die Sender 88 oder nur die Sensoren 90 benötigt. Entweder teilt man diese Sensorzusammenbauten entlang ihrer Längsmittelebene 96 in zwei Teile, von den jeweils eines an einer seitlichen Wand des Siebs 42 oder Förderbodens 56 bzw. 54 angebracht werden, oder man verwendet komplette Sensorzusammenbauten, an denen die nicht benötigten Sender und Empfänger nicht benutzt werden.

Bei einer anderen Ausführungsform als in der Figur 4 gezeigt könnte man zwei unterschiedliche Typen von Sensorzusammenbauten 84, 85, 86 verwenden, bei denen einer nur mit Sendern 88, die in beide seitlichen Richtungen ausstrahlen, und der andere nur mit Sensoren 90 ausgestattet ist, die in beide seitlichen Richtungen sensitiv sind.

Bei einer noch anderen Ausführungsform, wie sie in der Figur 5 gezeigt wird, könnten die Sensorzusammenbauten 84, 85, 86 auf beiden Seiten ihrer Längsmittelebene 96 mit übereinander angeordneten Sensoren 90 ausgestattet sein, d.h. die in der Figur 4 gezeigten Sender 88 durch Sensoren 90 ersetzt werden. Jeweils ein Sender 88 wird an der Oberseite des Sensorzusammenbaus 84, 85, 86, in Höhe des obersten Sensors 90 oder darüber angebracht und ggf. seitlich gegenüber den Sensoren 90 versetzt, montiert (oder es werden weiterhin Sender 88 übereinander angeordnet, jedoch gegenüber den benachbarten Sensoren 90 quer zur Zeichenebene der Figur 4 versetzt). Dann erhält man im Ergebnis zwei Lichtschranken (eine von links nach rechts und eine von rechts nach links wirkend), die insbesondere im Multiplexbetrieb, d.h. mit zeitlich versetzten Aktivierungen der Sender 88 und Auswertungen der Sensoren 90, arbeiten können.

Das Ausgangssignal 104 der Auswertungseinrichtung 92 wird einer Steuereinheit 106 zugeführt, die es evaluiert und eine Anzeigeeinrichtung 108 in der Kabine 34 ansteuern kann, um dem Bediener die seitliche Verteilung des Gemischs 98 und dessen Höhe anzuzeigen (vgl. hierzu die Offenbarung der WO 2019/171246 A1, die durch Verweis mit in die vorliegenden Unterlagen aufgenommen wird). Der Bediener kann somit, wenn die Verteilung nicht gleichmäßig sein sollte, entsprechende Maßnahmen veranlassen (vgl. dazu die folgenden Ausführungen zur selbsttätigen Ansteuerung von Aktoren 110, die prinzipiell auch von Hand bzw. unter Verwendung von Eingabemitteln und Aktoren 110 durchgeführt werden können). Zur Auswertung (und insbesondere der zugehörigen Zeitpunkte der Erfassung) des Signals sei auch auf die gesamte Offenbarung der WO 2015/181143 A1 verwiesen, die durch Verweis mit in die vorliegenden Unterlagen aufgenommen wird.

Alternativ oder zusätzlich kann die Steuereinheit 106, basierend auf dem Ausgangssignal 104 der Auswertungseinrichtung 92 einen oder mehrere Aktoren 110 selbsttätig ansteuern.

Bei einer Ausführungsform können, wenn anhand des Ausgangssignals 104 erkennbar ist, dass die seitliche Verteilung des Gemischs 98 auf dem Förderboden 56 nicht gleichmäßig ist, was beispielsweise der Fall sein kann, wenn der Mähdrescher 10 einen Seitenhang aberntet, an der Unterseite des Dreschbereichs des Axialdreschwerks 22 in dessen Umfangsrichtung verteilte Klappen durch den oder die Aktor(en) 110 derart angesteuert werden, dass die Klappen an jener Seite, an der die Höhe des Gemischs 98 größer als auf der anderen Seite ist, teilweise oder ganz geschlossen werden und jene auf der Seite mit geringerer Höhe des Gemischs 98 demgegenüber geöffnet werden (nicht gezeigt, vgl. jedoch EP 1 449 425 A1 und EP 2 537 404 A1).

Die aufaddierte oder durchschnittliche Höhe des Gemischs 98 auf dem Förderboden 56 und/oder 54 ist zudem ein Maß für den Durchsatz und kann durch die Steuereinheit 106 zur automatischen Einstellung der Vortriebsgeschwindigkeit des Mähdreschers 10 genutzt werden, und/oder zur automatischen Einstellung von Betriebsparametern des Reinigungszusammenbaus 26, wie der Drehzahl des Gebläses 40 und/oder der Öffnungsgröße der Lamellen der Siebe 42 und/oder 44.

Bei derselben oder einer anderen Ausführungsform kann die Steuereinheit 106 anhand des Ausgangssignals 104, das eine Information über die Verteilung des Gemischs 98 über die Breite des oberen Siebs 42 enthält, den Antrieb des Querförderers 50 kontrollieren. Wenn somit das Ausgangssignal 104 darauf hinweist, dass an einer Seite des oberen Siebs 42 mehr Gemisch 98 als auf der anderen Seite liegt, wird die Steuereinheit 106 den hier als Aktor 110 dienenden Antrieb des Querförderers 50 derart ansteuern, dass seine Oberseite sich in Richtung der Seite bewegt, auf der weniger Gemisch 98 vorhanden ist, und zwar umso schneller, je größer der Höhenunterschied im Gemisch 98 ist (vgl. DE 10 2022 118 393 A1, deren gesamte Offenbarung durch Verweis mit in die vorliegenden Unterlagen aufgenommen wird). Hierbei kann die Steuereinheit 106 auch die Höhe des Gemischs 98 auf dem Förderboden 56 und/oder 54 berücksichtigen, deren Sensorzusammenbauten 84 und 85 zeitlich eher mit dem Gemisch 98 zusammenwirken als die Sensorzusammenbauten 86 auf dem Sieb 42. Diese Signale können zur vorausschauenden Ansteuerung des Antriebs des Querförderers 50 dienen. Es wäre auch denkbar, dass die Steuereinheit 106 konfiguriert ist, anhand der Signale der Sensorzusammenbauten 84 bzw. 85 für den Förderboden 56 bzw. 54 und der Sensorzusammenbauten 86 für das Sieb 42 zu lernen, welche Ansteuerung des Antriebs des Querförderers 50 bei welcher Verteilung des Gemischs 98 auf dem Förderboden 56 welche Verteilung auf dem Sieb 42 zur Folge hat und darauf basierend den Antrieb entsprechend vorausschauend ansteuern.

Die aufaddierte oder durchschnittliche Höhe des Gemischs 98 auf dem Sieb 42 kann (alternativ oder zusätzlich zu jener auf dem Förderboden 56 durch die Steuereinheit 106 zur automatischen Einstellung von Betriebsparametern des Reinigungszusammenbaus 26, wie der Drehzahl des Gebläses 40 und/oder der Öffnungsgröße der Lamellen der Siebe 42 und/oder 44 genutzt werden.

Es sei noch angemerkt, dass man auch an den Leitblechen 62 des vorderen Bereichs 60 des rückwärtigen Förderers 48 Sensorzusammenbauten 84, 85, 86 anbringen und zur selbsttätigen Ansteuerung eines Verstellantriebs der Leitbleche 62 im Sinne einer Vergleichmäßigung der Verteilung des Gemischs 98 über die Breite des Reinigungszusammenbaus 26 nutzen könnte. Der rückwärtige Förderer 48 wäre dann als Förderboden im Sinne der Ansprüche anzusehen.

Weiterhin könnte ein Sensorzusammenbau 86 auch an sich längs erstreckenden Trennblechen 82 an den unteren Sieben 44 angebracht werden.

## Patentansprüche

1. Sensoranordnung zur Erfassung der Höhe eines Gemischs (98) auf einem Förderboden (56, 54) und/oder Sieb (42) eines Reinigungszusammenbaus (26) eines Mähdreschers (10), **dadurch gekennzeichnet, dass** an der Oberseite des Förderbodens (56, 54) und/oder des Siebs (42) wenigstens zwei übereinander positionierte, lichtempfindliche Sensoren (90) sowie ein Sender (88) im Abstand von den Sensoren (90) angebracht sind, wobei die Sensoren (90) konfiguriert sind, vom Sender (88) abgestrahltes Licht zu empfangen, insofern der Weg des Lichts vom Sender (88) zum Sensor (90) nicht durch das Gemisch (98) unterbrochen wird, und die Sensoren (90) mit einer Auswertungseinrichtung (92) verbunden sind, die konfiguriert ist, anhand des Ausgangssignals der Sensoren (90) ein für die Höhe des Gemischs (90) repräsentatives Ausgangssignal (104) zu erzeugen.

2. Sensoranordnung nach Anspruch 1, wobei der Sender (88) konfiguriert ist, Licht im sichtbaren und/oder im infraroten und/oder im ultravioletten Wellenlängenbereich abzusenden und die Sensoren (90) in dem besagten Wellenlängenbereich sensitiv sind.

3. Sensoranordnung nach Anspruch 1 oder 2, wobei die Sensoren (90) und der Sender (88) in seitlicher Richtung voneinander beabstandet sind.

4. Sensoranordnung nach einem der vorhergehenden Ansprüche, wobei mehrere übereinander angeordnete Sensoren (90) und der wenigstens eine zugehörige Sender (88) jeweils eine Lichtschranke bilden und mehrere Lichtschranken in seitlicher Richtung und/oder Förderrichtung des Gemischs (98) relativ zueinander versetzt angeordnet sind.

5. Sensoranordnung nach Anspruch 4, wobei mehrere übereinander angeordnete Sensoren (90) und wenigstens ein Sender (88) innerhalb eines gemeinsamen Gehäuses (93) angeordnet und unterschiedlichen Lichtschranken zugeordnet sind.

6. Sensoranordnung nach Anspruch 5, wobei das Gehäuse (93) in einer Aussparung eines Trennblechs (80, 82, 74) angeordnet ist.

7. Reinigungszusammenbau (26) mit einem Förderboden (56, 54) und/oder einem Sieb (42) und einer Sensoranordnung nach einem der vorhergehenden Ansprüche.

8. Mähdrescher (10) mit einem Reinigungszusammenbau (26) nach Anspruch 7.

9. Mähdrescher (10) nach Anspruch 8, wobei die Auswertungseinrichtung (92) mit einer Steuereinheit (106) verbunden ist, die konfiguriert ist, basierend auf dem Ausgangssignal (104) einen Aktor (110) des Mähdreschers (10) im Sinne einer Vergleichmäßigung der seitlichen Verteilung des Gemischs (98) anzusteuern.

10. Mähdrescher (10) nach Anspruch 9, wobei die Steuereinheit (106) konfiguriert ist, durch den Aktor (110) an der Unterseite des Dreschbereichs eines Axialdreschwerks (22) in dessen Umfangsrichtung verteilte Klappen derart anzusteuern, dass die Klappen an jener Seite, an der die Höhe des Gemischs (98) größer als auf der anderen Seite ist, geschlossen werden und jene auf der Seite mit geringerer Höhe des Gemischs (98) geöffnet werden und/oder durch einen Antrieb eines zwischen dem Förderboden (56, 54) und dem Sieb (42) angeordneten Querförderers (50) und/oder durch einen Aktor Leitbleche zur Steuerung der seitlichen Verteilung des Gemischs zu verstellen.
